# EUROPEAN PATENT APPLICATION

(11) **EP 2 082 864 A1**
(43) Date of publication of application: **29.07.2009**
(21) Application number: 08380020.1
(22) Date of filing: 28.01.2008
(51) Int. Cl.: B29C 70/08, B29C 70/86, B29D 24/00

(54) **Method for manufacturing reinforced panels for the inner liner of vehicles and panel obtained by means of said method**

(71) Applicant: Grupo Antolín Ingeniería, S.A., 09007 Burgos (ES)
(72) Inventor: Sanchez Lite, Alberto, 09007 Burgos (ES); Gonzalez Rodriguez, Ignacio, 09007 Burgos (ES)
(74) Representative: Carpintero Lopez, Francisco

(57) **Abstract**

The invention relates to a reinforced panel for the lining and manufacture of inner elements of a vehicle, for example seats, foldable trays, floors, door trimming, etc. The panel has a reinforced honey comb panel on each of its faces by respective reinforcing layers, as well as a piece of liner joined to the outer face of one of the reinforcing layers. The invention also relates to a method for manufacturing said reinforced liner panel.

## Description

### Object of the Invention

The present invention relates to a method for manufacturing a reinforced panel for the lining and manufacture of inner elements of a vehicle, for example seats, foldable trays, floors, door trimming, etc.

An object of the invention consists of providing a reinforced liner panel providing an aesthetic and structural function such that in addition to having a visible face, it can support a stress greater than that of its own weight or securing.

The present invention also relates to a panel obtained by means of said manufacturing method.

### Background of the Invention

The use of honey comb panels is very widespread in different industries. These panels are conventionally formed by a structure made of board formed by multiple honey comb cells arranged between two layers of polyurethane with fiberglass. The layers of polyurethane with fiberglass are parallel to one another and the honey comb cells are arranged between both panels with their walls perpendicular to the plane of said layers.

Honey comb panels have never been used for planar joinery work of automobiles.

European patent EP-1,303,425 describes a device for compartmentalizing the trunk of a vehicle in which a reinforcing layer 25 is joined to a structural layer 22 reproducing the shape or configuration of the latter and specifically with a completely planar shape. The layer (25) is not an independent piece which is joined by different means to the reinforcing layer 52, but rather a liner layer reproducing the shape of the reinforcing layer. The piece obtained is completely planar.

### Description of the Invention

The present invention solves the technical problem put forth by means of the inventive subject matter comprised in the attached independent claims.

One aspect of the invention thus relates to a reinforced liner panel comprising a reinforcing structure formed by a honey comb panel and first and second reinforcing layers of said panel, respectively joined to the upper and lower surfaces of the honey comb panel. The panel further comprises a piece of liner joined to the first outer surface of the mentioned reinforcing structure.

The reinforcing structure has at least one planar area through which the reinforcing structure and the piece of liner are joined. In a preferred embodiment, the reinforcing structure is joined to the piece of liner exclusively through said planar area. In other preferred embodiments, both elements can be joined in other areas in addition to said planar area, for example through parts of the perimetral edge.

The piece of liner and the reinforcing structure are independent and rigid elements which are joined through planar portions of both and through joining means provided in the present invention. The piece of liner forms the visible element of the panel, i.e. the element of the panel that is seen once it has been installed inside a vehicle.

In the liner panel object of the invention, it is the piece of liner which is formed in order to fulfill the use which is to be given to the panel, for example to form a tray, a floor or trimming for vehicle doors, a seat for vehicles, etc.

In addition, the reinforcing structure has the purpose of providing the assembly with enough strength so that it can fulfill its functionality. The shape of the reinforcing structure thus preferably has a shape different from that of the piece of liner and will be formed for arranging one or more planar areas in correspondence with the planar areas of the piece of liner for fixing both elements. The shape of the reinforcing structure is generally simpler than that of the piece of liner since the reinforcing structure does not have to take on the shape of the end product.

The invention thus allows obtaining reinforced panels of different types in a simple manner, since it is not necessary to give shape to all elements forming the panel, but rather it is basically only necessary to give shape to the piece of liner, which due to its thickness and nature can be easily molded with complex shapes.

Another aspect of the invention relates to an inner component of a vehicle, such as a seat, a tray, a floor or trimming for doors for example, including the previously described liner panel.

Another aspect of the invention relates to a method for manufacturing the previously described reinforced liner panel comprising the operative phases of:
a) obtaining a reinforcing structure formed by a honey comb panel and first and second reinforcing layers joined respectively to the upper and lower surfaces of the honey comb panel,
b) forming the reinforcing structure for obtaining at least one planar area,
c) die-cutting the reinforcing structure according to the configuration to be obtained for the piece of liner,
d) obtaining a piece of liner with a configuration at least in part similar to the configuration of the reinforcing structure, and
e) joining the mentioned piece of liner to an outer surface of the mentioned reinforcing structure through the planar area of the reinforcing structure.

### Description of the Drawings

To complement the description being made and for the purpose of aiding to better understand the features of the invention according to a preferred practical embodiment thereof, a set of drawings is attached as an integral part of said description, in which the following has been shown with an illustrative and non-limiting character:
Figure 1 shows a schematic section of the panel object of the invention in which the piece of liner is joined to the reinforcing structure by means of microperforations.
Figure 2 shows a schematic section of the panel object of the invention in which the piece of liner is joined to the reinforcing structure by means of elongated extensions.
Figure 3 shows a schematic section of the panel object of the invention in which the piece of liner is joined to the reinforcing structure by means of adhesive.
Figure 4 shows a schematic section of a first operative phase of the method for manufacturing the panel prior to the coupling between the piece of liner and the reinforcing structure.
Figure 5 shows a schematic section of a subsequent operative phase of the method for manufacturing the panel when the piece of liner is provisionally coupled to the reinforcing structure.
Figure 6 shows a schematic section of a subsequent operative phase of the method for manufacturing the panel when the piece of liner is definitively coupled to the reinforcing structure.
Figure 7 shows a detail of an end of the reinforcing structure.
Figure 8 shows a schematic section of a practical example of the liner panel object of the invention in which the piece of liner has been given a specific shape for a specific use.

### Preferred Embodiment of the Invention

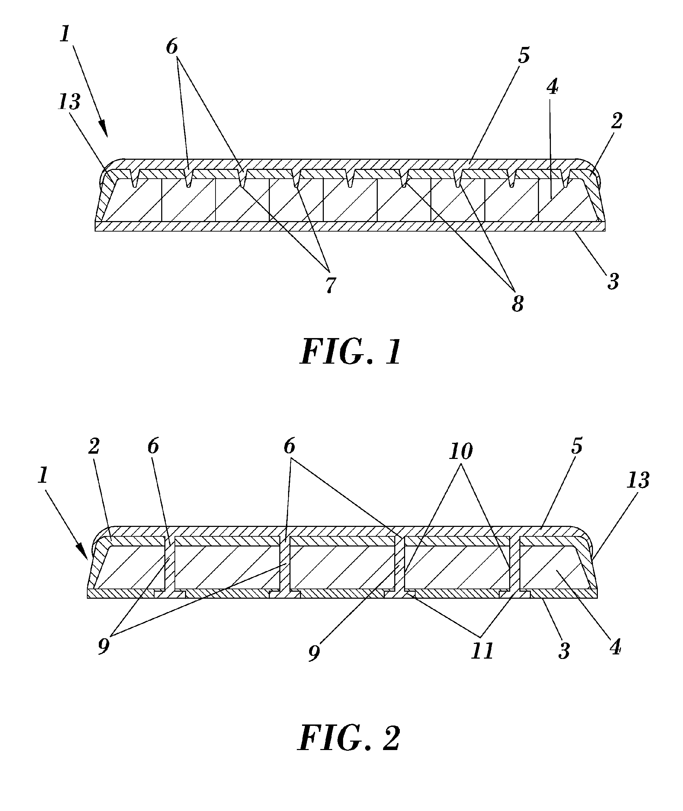

Figure 1 shows a preferred embodiment of a liner panel object of the invention which is made up of a reinforcing structure (1) formed by a honey comb panel (4) in which an upper surface and a lower surface that are perpendicular to the cells of the honey comb panel are defined. The reinforcing structure (1) is further made up of a first reinforcing layer (2) and a second reinforcing layer (3) joined respectively to said upper and lower surfaces of the honey comb panel (4) by means of a bonding material, respectively defining a first outer surface and a second outer surface of the mentioned reinforcing structure.

The reinforcing layers (2,3) are preferably made of fiberglass and the bonding material is polyurethane.

The liner panel further comprises a piece of liner (5) joined to the first outer surface of the mentioned reinforcing structure. The liner layer (5) is preferably made of plastic and forms the visible face of the panel, therefore having the finishing necessary for such function. To that end the piece of liner can have an outer liner layer, a textile layer for example.

The reinforcing structure (1) comprises at least one planar area through which it is joined with the piece of liner (5). The panel object of the invention is therefore formed such that it has at least one planar area in which the reinforcing structure and the piece of liner are joined, but it further has other areas arranged at a different level of the horizontal plane corresponding to said planar areas demarcated by stepping.

The reinforcing structure can thus have at least two areas with different thickness which determine at least one recess in the first outer surface or in the second outer surface.

The reinforcing structure can likewise have at least one elevation in the first outer surface or in the second outer surface.

Different techniques have been provided in the invention for joining the piece of liner and the reinforcing structure such that both elements are joined by means of at least one anchoring point arranged in correspondence with said planar area of the mentioned reinforcing structure.

In the case of Figure 1, said at least one anchoring point (6) comprises at least one elongated extension (7) perpendicular to the piece of liner (5), and at least one blind perforation (8) traversing the first reinforcing layer (2) and extending in part of the honey comb panel (4). Said elongated extension (7) is configured to be tightly housed in said at least one blind perforation (8). It preferably has a plurality of anchoring points (6) evenly distributed in one or more planar areas which the panel has.

Another preferred embodiment of the invention has been illustrated in Figure 2. In this case the anchoring points (6) are formed by at least one elongated extension (9) emerging perpendicularly to the piece of liner (5), the reinforcing structure (1) comprising at least one through perforation (10) traversing the first reinforcing layer (2), the honey comb panel (4) and the second reinforcing layer (3), the mentioned at least one elongated extension being configured to be tightly house in at least one through perforation (10).

Said at least one elongated extension (9) of the piece of liner (5) has on its free end an enlargement (11), with larger dimensions than the through perforations (10) of the reinforcing structure (1), said elongated extensions being configured to keep the piece of liner and the reinforcing structure joined.

The second reinforcing layer (3) preferably has at least one recess in correspondence with the mentioned through perforation configured to at least partially house the mentioned enlargement (11) of the free end of said elongated extensions (9).

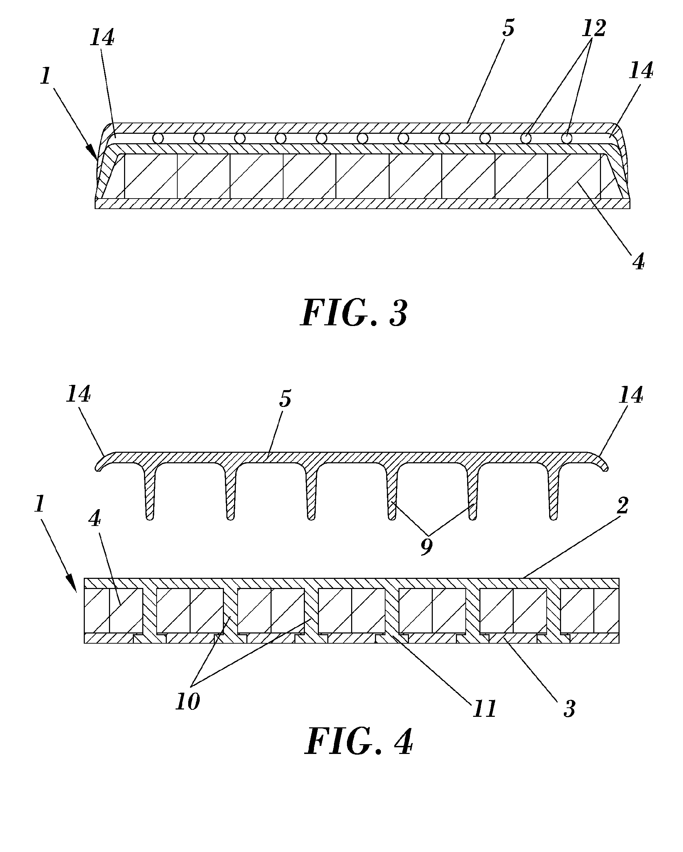

In the preferred embodiment of the Figure 3, the anchoring point between the piece of liner (5) and the first outer surface of the reinforcing structure (1) consists of an adhesive (12).

Additionally, it has been provided in the invention that in at least one part of the side perimeter of the honey comb panel, the first reinforcing layer (2) and the second reinforcing layer (3) are joined, covering the perimetral edge of the honey comb panel (4). In the specific case of the panel of Figures 1,2 and 3, it is observed how the first reinforcing layer (2) extends in a perimetral portion (13) covering at least in part the perimetral edge of the honey comb panel (4). As has been depicted in said figures, the perimetral portion (13) can be joined with the second reinforcing layer (3).

The mentioned anchoring point alternatively consists of a prolongation (14) of the piece of liner (5) arranged at its edge, said prolongation (14) being configured to interlock with the reinforcing structure (1) as observed for example in Figure 3.

The prolongation (14) of the piece of liner (5) can exist on the entire the perimetral edge of the piece of liner (5), or can consist of a plurality of individual prolongations distributed in selected areas of the perimeter of the piece of liner (5).

In several preferred embodiments the liner panel can have two faces for which it incorporates in correspondence with the second outer surface of the reinforcing structure (1) a second liner layer, which can be joined to the reinforcing structure by means of any of the previously described techniques.

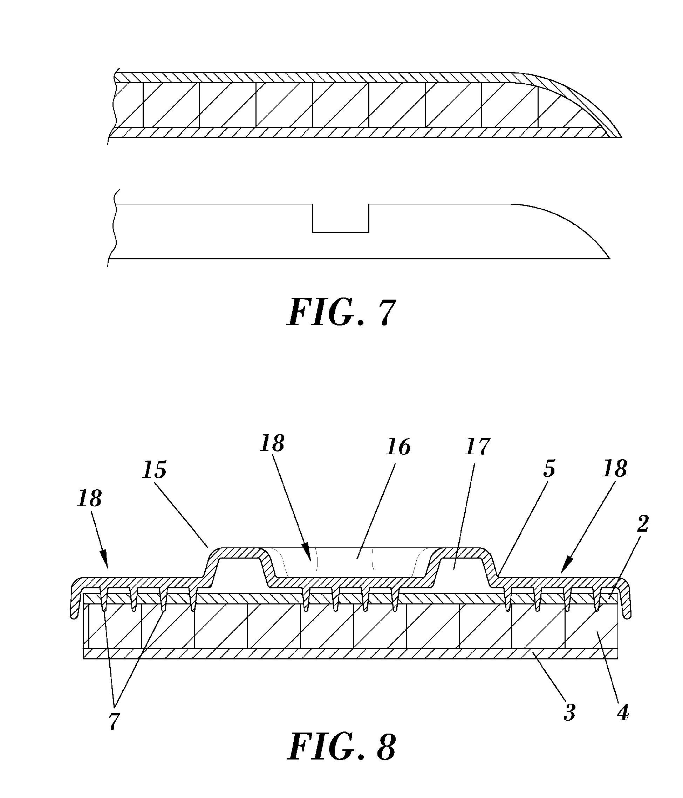

Figure 8 shows an embodiment in which the reinforcing structure (1) is planar and the piece of liner (5) is formed in order to fulfill a specific use, for example an object-holding tray. The piece of liner (5) and the reinforcing structure (1) thus have a different shape since forming the piece of liner determines elevations (15) and depressions (16) in said piece which in turn form cavities (17) with respect to the reinforcing structure (1).

In the example of Figure 8, the piece of liner and the reinforcing structure have several superimposed substantially planar areas (18) to allow the joining between both elements through any of the joining means provided by the invention. In the case of this embodiment both elements are joined by elongated extensions (7).

The invention also relates to a method for manufacturing reinforced liner panels, in which on one hand a reinforcing structure (1) is obtained formed by a honey comb panel in which an upper surface and a lower surface that are perpendicular to the cells of the honey comb panel are defined, as well as first and second reinforcing layers (2,3) joined respectively to said upper and lower surfaces of the honey comb panel (1), by means of a bonding material, respectively defining a first outer surface and a second outer surface of the mentioned reinforcing structure.

The reinforcing structure (1) is formed for obtaining therein at least one planar area and it is die-cut with the configuration to be obtained for the piece of liner (5). The reinforcing structure is preferably formed by pressure and heat.

In addition, at least one part of the piece of liner (5) is configured in a manner similar to the configuration of the reinforcing structure (1), such that the mentioned piece of liner (5) is joined to the first outer surface of the mentioned reinforcing structure (1) through the planar area of the reinforcing structure.

In the formation of the reinforcing structure, at least two areas with different thickness, which can define at least one recess in the first outer surface and/or in the second outer surface, can be formed therein. Likewise, at least one elevation in the first outer surface and/or in the second outer surface can be formed in the reinforcing structure, as well as stepping defining areas at a different level in the panel.

In the die-cutting phase of the reinforcing structure, at least one blind perforation or at least one through perforation (10) can be obtained therein.

In addition, in the formation of the piece of liner at least one elongated extension (9) perpendicular to the piece of liner (5), which has a length greater than the thickness of the reinforcing structure, can be formed therein.

During the formation of the reinforcing piece, at least one prolongation on its edge can be obtained, said prolongation being configured to interlock with said reinforcing structure.

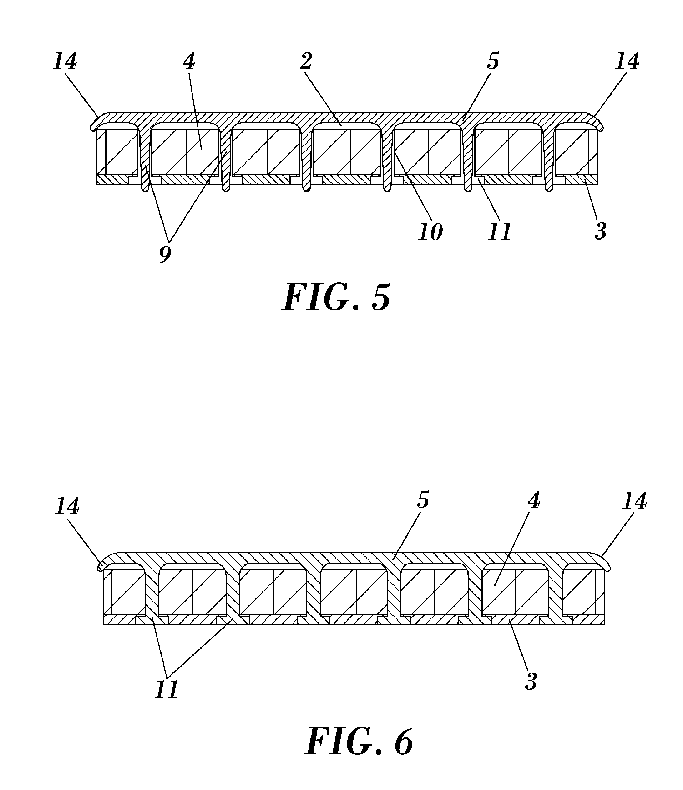

In the method of the invention, the joining between the piece of liner and the reinforcing structure can be carried out such that said elongated extensions penetrate in said through perforations and the ends of the mentioned elongated extensions project through the perforations with respect to the second reinforcing layer, as shown in Figures 4 and 5.

The ends of the elongated extensions projecting from the second outer surface of the reinforcing structure are subjected to heat deformation such that an enlargement (11) is obtained with larger dimensions than the through perforations of the reinforcing structure, as shown in Figure 6.

The piece of liner is alternatively obtained by overmolding on the first outer surface of the reinforcing structure, such that part of the piece of liner penetrates in said perforations.

In another embodiment, the joining between the piece of liner and the reinforcing structure is carried out by assembling both pieces such that the prolongations of the edge of the piece of liner interlock onto the reinforcing structure.

Another preferred example for joining the piece of liner and the reinforcing structure consists of gluing both elements.

The phase for obtaining the piece of liner and the phase for joining this piece with the reinforcing structure by means of polyurethane are preferably carried out simultaneously.

In another preferred embodiment, the method comprises obtaining a second liner layer in correspondence with the second outer surface of the reinforcing structure.

An outer liner layer can be further obtained on the pieces of liner.

Different possibilities of practical embodiments of the invention are described in the attached dependent claims.

In view of this description and set of drawings, a person skilled in the art can understand that the embodiments of the invention which have been described can be combined in many ways within the object of the invention. The invention has been described according to several preferred embodiments thereof, but for a person skilled in the art it will be evident that multiple variations can be introduced in said preferred embodiments without exceeding the object of the claimed invention.

## Claims

1. A method for manufacturing reinforced liner panels which comprises:
a) obtaining a reinforcing structure formed by a panel with a honey comb structure in which two surfaces are defined, one on each side of the panel with a honey comb structure, both perpendicular to the cells of the honey comb panel, as well as first and second reinforcing layers joined respectively to each of said outer surfaces of the honey comb panel, by means of a bonding material, respectively defining a first outer surface and a second outer surface of the mentioned reinforcing structure,
b) forming the reinforcing structure by obtaining a shape consisting of at least one portion of planar surface,
c) die-cutting the reinforcing structure according to the configuration of the profile to be obtained adjusted to that of a piece of liner,
d) obtaining a piece of liner with a configuration at least in part similar to the configuration of the reinforcing structure
e) joining the mentioned piece of liner to the first outer surface of the mentioned reinforcing structure by means of joining means located in the planar area of the reinforcing structure.

2. A method according to claim 1 wherein, the formation of step b) is carried out by means of heating and applying pressure.

3. A method according to claim 1 or 2, wherein in step b) a reinforcing structure having at least one recess in any of the outer surfaces is obtained.

4. A method according to claim 1 or 2, wherein in step b) a reinforcing structure having at least one elevation in any of the outer surfaces is obtained.

5. A method according to claim 1 or 2, wherein in step b) a reinforcing structure is obtained configured such that at least in one part of the side perimeter of the honey comb panel the first reinforcing layer and the second reinforcing layer are joined enclosing the perimetral edge of the mentioned honey comb panel.

6. A method according to claim 1, wherein in step c) a reinforcing structure comprising at least one blind perforation is obtained.

7. A method according to claim 1, wherein in step c) a reinforcing structure comprising at least one through perforation is obtained.

8. A method according to claim 1, wherein in step d) a piece of liner comprising at least one elongated extension perpendicular to its surface is obtained.

9. A method according to claims 7 and 8, wherein said at least one elongated extension of the piece of liner has a length greater than the thickness of the reinforcing structure obtained in step a) such that the reinforcing structure and the piece of liner joined in step e) are joined by means of inserting said at least one perpendicular elongated extension into the at least one through perforation of the reinforcing structure.

10. A method according to claim 1 wherein, in step d) a piece of liner comprising at least one prolongation at its edge is obtained, said prolongation being configured to interlock with said reinforcing structure.

11. A method according to claims 8 and 9, wherein step e) is carried out by putting the piece of liner and the reinforcing structure together, such that said at least one elongated extension penetrates in said at least one through perforation and the end of the mentioned elongated extension projects through the perforation with respect to the second reinforcing layer.

12. A method according to any of the previous claims, **characterized in that** a different shape is given to the piece of liner and to the reinforcing structure, such that the piece of liner is formed in order to fulfill a specific use and the reinforcing structure is formed for having at least one planar area in order to allow joining it with the piece of liner.

13. A liner panel according to claim 12, **characterized in that** a major portion of the reinforcing structure is planar.

14. A method according to claims 10 and 11 comprising heat deformation of the ends of the at least one elongated extension projecting from the second outer surface of the reinforcing structure, forming an enlargement of greater dimensions than at least one through perforation of the reinforcing structure in which it is inserted.

15. A method according to claim 6, **characterized in that** the piece of liner is obtained by overmolding on the first outer surface of the reinforcing structure such that part of the piece of liner penetrates in said at least one blind perforation of the reinforcing structure.

16. A method according to claim 10, **characterized in that** step e) is carried out by assembling the piece of liner and the reinforcing structure such that the at least one prolongation of the edge of the piece of liner interlocks onto the perimetral edge of the reinforcing structure.

17. A method according to claim 1, **characterized in that** step e) is carried out by gluing between said piece of liner and the first outer surface of the reinforcing structure.

18. A method according to any of claims 1 to 17, **characterized in that** the bonding material is polyurethane.

19. A method according to any of claims 1 to 18, **characterized in that** said first and second reinforcing layers are made of fiberglass.

20. A method according to claims 1 and 19, **characterized in that** phases d) and e) are carried out simultaneously, the polyurethane acting as a joining element.

21. A method according to any of claims 1 to 20, **characterized in that** it comprises obtaining a piece of liner the shape of which is in correspondence with that of the first outer surface of the reinforcing structure.

22. A lining method according to any of claims 1 to 19, **characterized in that** it comprises obtaining an additional outer liner layer on the piece of liner.

23. A reinforced liner panel obtained by the manufacturing method according to any of claims 1 to 22, comprising:
a reinforcing structure in turn comprising
a panel with a honey comb structure in which two surfaces that are perpendicular to the cells of the honey comb panel are defined, one on each side of said reinforcing structure and
first and second reinforcing layers joined respectively to said outer surfaces of the panel with a honey comb structure by means of a bonding material, respectively defining a first outer surface and a second outer surface of the mentioned reinforcing structure,
**characterized in that** said reinforced liner panel further comprises a piece of liner joined to the first outer surface of the mentioned reinforcing structure and **in that** the reinforcing structure comprises at least one planar area through which the reinforcing structure is joined to the piece of liner.

24. A reinforced liner panel according to claim 23, **characterized in that** the reinforcing structure has at least one recess in one of its outer surfaces.

25. A reinforced liner panel according to any of claims 23 or 24, **characterized in that** the reinforcing structure has at least one elevation in the first outer surface.

26. A reinforced liner panel according to any of claims 23 to 25, **characterized in that** the bonding material is polyurethane.

27. A reinforced liner panel according to any of claims 23 to 26, **characterized in that** said first and second reinforcing layers are made of fiberglass.

28. A reinforced liner panel according to any of claims 23 to 27,
**characterized in that** the piece of liner is made of plastic.

29. A reinforced liner panel according to any of claims 23 to 28, **characterized in that** has at least one anchoring point between said piece of liner and the first outer surface of the reinforcing layer by means of which they are kept joined together, the mentioned anchoring point being arranged in correspondence with the at least one planar area of the mentioned reinforcing structure.

30. A reinforced liner panel according to claim 29, **characterized in that** said at least one anchoring point comprises at least one elongated extension of the piece of liner perpendicular to its surface, the reinforcing structure comprising at least one blind perforation traversing the first reinforcing layer and extending in part of the panel with a honey comb structure, the mentioned at least one elongated extension being configured to be tightly housed in the at least one blind perforation.

31. A reinforced liner panel according to claim 29, **characterized in that** said anchoring points are formed by at least one perpendicular elongated extension of the piece of liner, the reinforcing structure comprising at least one through perforation traversing the first reinforcing layer, the honey comb panel and the second reinforcing layer, the mentioned at least one elongated extension being configured to be tightly housed in the at least one through perforation.

32. A reinforced liner panel according to claim 29, **characterized in that** said at least one elongated extension of the liner layer has on its free end an enlargement with larger dimensions than the through perforations of the reinforcing structure, said elongated extensions being configured to keep the piece of liner and the reinforcing structure joined.

33. A reinforced liner panel according to claim 32, **characterized in that** the second reinforcing layer has at least one recess, in correspondence with the mentioned through perforation, configured to at least partially house the mentioned enlargement of the free end of said elongated extensions.

34. A liner panel according to claim 23, **characterized in that** said liner layer is joined to the first outer surface of the reinforcing structure by means of an adhesive.

35. A reinforced liner panel according to claim 30, **characterized in that** the mentioned at least one anchoring point comprises an adhesive.

36. A reinforced liner panel according to any of claims 23 to 35, **characterized in that** in at least one part of the side perimeter of the honey comb panel the first reinforcing layer and the second reinforcing layer are joined enclosing the perimetral edge of the honey comb panel.

37. A reinforced liner panel according to claim 29, **characterized in that** the anchoring point consists of a prolongation of the piece of liner arranged at least in one part of its perimetral edge, said prolongation being configured to elastically interlock with said reinforcing structure.

38. A reinforced liner panel according to claim 37, **characterized in that** said prolongation extends along the entire the perimetral edge of the piece of liner.

39. A reinforced liner panel according to claim 37, **characterized in that** it has a plurality of prolongations distributed along the perimeter of the piece of liner.

40. A reinforced liner panel according to any of claims 23 to 39, **characterized in that** the piece of liner has, in correspondence with at least one anchoring point, a shape substantially similar to the shape of the reinforcing structure.

41. A liner panel according to any of claims 23 to 40, **characterized in that** the piece of liner and the reinforcing structure have a different shape, such that the piece of liner is formed in order to fulfill a specific use and the reinforcing structure is formed for having at least one planar area to allow joining it with the piece of liner.

42. A liner panel according to claim 41, **characterized in that** a major portion of the reinforcing structure is planar.

43. A seat for vehicles **characterized in that** it comprises a reinforced liner panel according to any of claims 23 to 42.

44. A foldable tray for vehicles **characterized in that** it comprises a reinforced liner panel according to any of claims 23 to 42.

45. A floor for vehicles **characterized in that** it comprises a reinforced liner panel according to any of claims 23 to 42.

46. A separating tray of the loading compartment of a vehicle **characterized in that** it comprises a reinforced liner panel according to any of claims 23 to 42.
